(19) Europäisches Patentamt
European Patent Office
Office européen des brevets

(11) **EP 3 890 316 B1**

(12) **EUROPEAN PATENT SPECIFICATION**

(45) Date of publication and mention
of the grant of the patent:
**22.10.2025 Bulletin 2025/43**

(51) International Patent Classification (IPC):
**H04N 17/00** (2006.01)    **G03B 43/00** (2021.01)
**G06T 7/80** (2017.01)

(21) Application number: **20167451.2**

(22) Date of filing: **01.04.2020**

(52) Cooperative Patent Classification (CPC):
**H04N 17/002; G03B 43/00; G06T 7/80;**
G06T 2207/10152; G06T 2207/30208;
G06T 2207/30252

(54) **COLLIMATOR BASED CAMERA CALIBRATION**

KOLLIMATORBASIERTE KALIBRIERUNG EINER KAMERA

ÉTALONNAGE BASÉ SUR COLLIMATEUR DE CAMÉRA

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**06.10.2021 Bulletin 2021/40**

(73) Proprietor: **AUMOVIO Autonomous Mobility
Germany GmbH
85057 Ingolstadt (DE)**

(72) Inventors:
• **Lasaruk, Aless
90411 Nürnberg (DE)**
• **Manjunatha, Sumukha
90411 Nürnberg (DE)**

(74) Representative: **Aumovio Corporation
Continental Automotive
Technologies GmbH
Putzbrunner Straße 69
81739 München (DE)**

(56) References cited:
EP-A1- 3 166 312      JP-A- 2007 124 214
KR-B1- 100 924 115    US-A- 4 648 695
US-A1- 2016 210 750   US-A1- 2017 201 744
US-B1- 8 619 144

EP 3 890 316 B1

**Description**

FIELD OF THE INVENTION

The present invention relates to a camera calibration system, the usage of the camera calibration system for calibrating a test camera, and a method for calibrating a test camera.

BACKGROUND

In automotive applications as autonomous driving, various sensors such as cameras are used. For a correct behavior of the algorithms, it is essential that the optics of the cameras are well-defined and equal for each camera.

JP 2007 124 214 A describes a system for measuring a position of an image sensor.

US 2017 / 201 744 A1 discloses a system for aligning an image sensor relative to a lens module prior to fixing the image sensor to the lens module by using a collimator module.

EP 3 166 312 A1 discloses a multi-camera module with two cameras which are aligned relative to each other before being put in use.

US 4 648 695 A relates to an illumination apparatus for testing photoelectric devices and has its focus on providing a superior illumination.

KR 100 924 115 B1 discloses a camera module testing device for testing the long distance focus and resolution of a plurality of camera modules.

However, due to the production process, each camera has a slightly different geometric projection behavior, for example, the property to map space points to image pixels. If disregarded, this deviation can introduce errors in automotive algorithms ranging from inaccurate distance or angular measurements up to reduced availability of the assistance system. Therefore, in camera production the projection function of each camera can be estimated and tested for how far it deviates from the nominal specifications. The estimated parameters can be stored for later usage in the automotive application. If there are significant deviations from the nominal specifications, the camera is not delivered to the customer.

US 8 619 144 B1 refers to camera calibration techniques, in which the camera system to be calibrated if coupled to a computing device and an automated positioning platform coupled to a target structure.

US 2016 / 210 750 A1 relates to a vision system including a vehicle camera, the vision system providing enhanced camera calibration using a monoview noncoplanar three-dimensional calibration pattern.

The calibration is usually performed using photogrammetric methods, where targets comprising a test pattern have to be placed in the working range of the camera to obtain accurate geometric projection behavior. Projection of space points outside the range, where the targets had been placed during calibration, is essentially performed by extrapolation, which leads to inaccurate results. If the camera must operate at a broad range of distances calibration with a photogrammetric setup turns to an infeasible or an inaccurate solution.

SUMMARY

There may, therefore, be a need to provide a system and a method to improve the accuracy of calibration parameters at low effort.

The object of the present invention is solved by the subject-matter of the appended independent claims, wherein further embodiments are incorporated in the dependent claims, the description and the figures.

Technical terms are used by their common sense. If a specific meaning is conveyed to certain terms, definitions of terms will be given in the following in the context of which the terms are used.

According to a first aspect, a camera calibration system is provided, which comprises a mounting frame and a first processing unit. Inside the mounting frame, an intermediate optical system is arranged, comprising in a longitudinal (x-) direction in series a pattern plate with a pattern, a collimating lens, and a camera plate arranged between a top side and a bottom side of the mounting frame hold by an adjustable fixture on which a test camera to be calibrated that is oriented towards the pattern plate and that is connected to the first processing unit can be mounted, wherein the adjustable fixture is embodied to tilt the camera plate so as to adjust an inclination angle of the test camera. The test camera to be calibrated is configured to produce an image from sensed light emitted by a source of light and travelling through the pattern plate and the collimating lens. The first processing unit is configured to process the image for calibration. The mounting frame has at least a top side and a bottom side with fixtures at which the elements of the intermediate optical system are attached to. The term "inside" relates to the positions between the top side and the bottom side of the mounting frame. The source of light may be a lamp, an LED, or another type of light emitter, located either inside the mounting frame, or outside, and emits light towards the test camera to be calibrated. The longitudinal direction is a direction parallel to the top and bottom side.

In an example, the pattern plate has several sharp transitions from transparent to non-transparent sections forming the pattern. E.g., the pattern may comprise non-transparent circles or rectangular sections. Thus, the pattern plate

2

forms a pattern of light, which is casted to the adjustable collimating lens or the collimating lens system, respectively, passing further to the optics of the calibrated camera. The camera receives the light from the optical system and transmits the image to the processing unit. The processing unit then performs necessary computations to estimate and store the calibration results.

The longitudinal position of the pattern plate is adjustable and/or the longitudinal position of the collimating lens is adjustable. Since the collimating lens is adjustable, it is possible to simulate different pattern distances in the image of the camera, thus covering different parts of the operating range of the camera. The collimating lens and the distance of the adjustable fixture are configured in a way that the pattern covers the entire image of the test camera. For this, the lens may be, for example, built as a thick lens with a respective profile. In order to obtain the adjustment properties, the fixtures of the pattern plate and the collimating lens may, for example, comprise rails along which the these optical elements may slide. The camera may be mounted on the camera plate that is arranged between the top side and the bottom side of the mounting frame and that is hold by the adjustable fixture. The adjustable fixture allows to tilt the camera plate, so as to change the orientation of the test camera.

According to an embodiment, the mounting frame is a tube in order to, e.g., impede interfering light of the environment outside the mounting frame. Further, the inner surface of the tube may have a structure and color such that unwanted reflections are avoided. The tube may be of rectangular shape comprising a top wall at its top side, a bottom wall at its bottom side, a front wall, and a rear wall, such that these walls build a longitudinal tube with openings at the left side and at the right side. In a variation, the tube may also comprise left and right side walls. If the source of light is outside the tube, there may be a window or an opening at one side to inject the light.

The camera calibration system further comprises a semi-transparent mirror arranged inside the mounting frame between the pattern plate and the collimating lens, a non-transparent mirror mounted on the camera plate, and an adjustment camera arranged outside the tube at the same longitudinal position as the semi-transparent mirror. Moreover, it further comprises a second processing unit connected to the adjustment camera and configured to process the image for estimating the error in the adjustment of the camera calibration system. The camera calibration system is configured such that the light from the source of light passes through the pattern plate, the semi-transparent mirror, and the collimating lens, is reflected at the non-transparent mirror to the semi-transparent mirror, and is reflected at semi-transparent mirror to the adjustment camera. According to an embodiment, the second processing unit is configured to process an image produced by the adjustment camera from the light to support the mechanical adjustment.

This setup allows to accurately mechanically adjust the camera calibration system, such that the collimator lens is aligned with the optical axis of the tested camera up to a small error.

According to the present invention, the first processing unit is further configured to estimate intrinsic parameters of the intermediate optical system and respective extrinsic parameters and collimator distance scaling factors of a distance between the pattern plate and the collimating lens, which allows the calibration of the intermediate optics, i.e., the collimating lens system.

According to a further embodiment, the camera calibration system further comprises a first motor for moving the pattern plate in longitudinal (x-) direction; a second motor for moving the collimating lens in longitudinal (x-) direction; a controller, configured to drive the first motor and the second motor in an automated calibration process, wherein images are taken in the camera calibration system, and wherein the images are based on various positions of the adjustable pattern plate and / or the adjustable collimating lens. Similarly, the inclination of the test camera may be adjusted automatically. By an automated adjusting, time and therefore also costs are saved.

The camera calibration system may be integrated into a single device, or the mounting frame and the elements inside the frame may be designed as one device comprising wired or wireless data and / or electrical interfaces to the one or more processing units.

According to an aspect, a usage of a camera calibration system for calibrating a test camera is provided.

According to a further aspect, a method for calibrating a test camera is provided, comprising the steps: adjusting the camera calibration system, guiding light from a source of light to a test camera to be calibrated, wherein the light passes through a pattern plate at a first position comprising a pattern and a collimating lens at a second position, detecting an image produced by the light by the test camera, transferring the image to a first processing unit, and processing the image for calibration. This calibration method using the camera calibration system described above, combines photogrammetric calibration approaches with light collimation, which results in an efficient and easy to handle calibration procedure.

According to an embodiment, the method further comprises the following steps before performing the calibration of the test camera: reflecting the light received from the collimating lens at a mirror mounted on a test camera plate to which the test camera is attached to, guiding the light back through the collimating lens to a semi-transparent inclined mirror and reflecting the light to an adjustment camera, detecting an image at the test camera and the adjustment camera and processing the detected images, comparing the detected images at the test camera and the adjustment camera, and adjusting the inclination angle of the test camera plate such that the camera is oriented along the optical axis (-x - direction) based on the comparison. With the above procedure, the normal of the mirror has a particular orientation can be adjusted such that the pattern is imaged to a specific position in the image of the adjustment camera. In this way, the optical system can be precisely adjusted or calibrated.

According to an embodiment, the processing of the image for calibration comprises: projecting a pattern point s of the pattern of the pattern plate to the image p of the test camera using a first projection function k such that $p = k(s, \theta + \gamma_1, \psi + \gamma_2)$ of a general model function m, where $p = m(s, \theta, \psi, \gamma)$, k is a known camera model of the test camera, and $\gamma = \gamma_1 + \gamma_2$ models the intermediate optical system as an offset to extrinsic parameters $\theta$ and intrinsic parameters $\psi$. The projection is applied to at least one pattern point $s_i$, wherein i corresponds to a number 1...n of a pattern point $s_i$, and finally, calibration values for $\theta$ and $\psi$ are estimated by minimizing $L(\theta, \psi) = \Sigma_{i=1 \text{ to } n} \| p_i - m(s_i, \theta, \psi, \gamma) \|^2$.

According to an alternative embodiment, the processing of the image for calibration comprises: projecting a pattern point s of the pattern of the pattern plate to the image p of the test camera using a first projection function k such that $p = k(s, \theta + \gamma_1, \psi + \gamma_2)$ of a general model function m, where $p = m(s, \theta, \psi, \gamma)$. In this alternative embodiment, k is a known camera model of the test camera, such that $p = d(k(s, \theta, \psi), s)$, with extrinsic parameters $\theta$ and intrinsic parameters $\psi$. The function d shifts the output of the regular camera model dependent on the distance of s to the test camera. The projection is applied to at least one pattern point $s_i$, wherein i corresponds to a number 1...n of a pattern point $s_i$, and finally, calibration values for $\theta$ and $\psi$ are estimated by minimizing $L(\theta, \psi) = \Sigma_{i=1 \text{ to } n} \| p_i - m(s_i, \theta, \psi, \gamma) \|^{2i}$.

According to an embodiment, the first position of the pattern plate and the second position of the collimating lens are adjustable. A pattern point s of the pattern of the pattern plate is projected to the image p of the test camera for more than one image j, wherein each image j is taken at a different position of the pattern plate and/or the collimating lens, so that a pattern point $s_{ij} = d_j s_i$, wherein i corresponds to a number 1... n of a pattern point $s_i$, $d_j$ is the scaling factor of a distance depending on the positions of the pattern plate and the collimator lens, and $s_{ij}$ are the pattern points of the pattern plate. Finally, parameters $\theta$ and $\psi$ are estimated by minimizing $L(\theta_1,...,\theta_m, \psi) = \Sigma_{i=1 \text{ to } n} \Sigma_{j = 1 \text{ to } m} \| p_{ij} - m(s_{ij}, \theta_j, \psi, \gamma) \|^2$. Thus, due to the adjustable elements, the method is suitable to accurately calibrate the test camera within an arbitrary range of distances.

According to an embodiment the method further comprises determining, by using a set of l test cameras with known intrinsic parameters $\psi_{1-l}$, pattern points $p_{ijk}$ corresponding to space points $s_{ij}$, wherein i corresponds to an index of a pattern point $s_i$ running from 1...n, j to an index of an image running from 1...m, and k to an index of a camera running from 1...l; and estimating intrinsic parameters $\gamma$ of the intermediate optical system and respective extrinsic parameters $\theta_i$ and collimator distance scaling factors $d_i$ by minimizing

$$L(\theta_{11},...,\theta_{ml}, d_1,...,d_m, \gamma) = \Sigma_{k=1 \text{ to } l} \Sigma_{i=1 \text{ to } n} \Sigma_{j = 1 \text{ to } m} \| p_{ijk} - m(d_j s_i, \theta_{jk}, \psi_k, \gamma) \|^2.$$

Using a set of l test cameras with known intrinsic parameters $\psi_{1-l}$ allows a calibration of the intermediate optics, i.e., the collimating lens system.

According to a further embodiment, the adjustment of the inclination angle of the test camera plate is controlled by a controller connected to the first processing unit for obtaining images based on various inclinations of the test camera plate.

According to a further embodiment, the adjustment of the pattern plate and/or the adjustment of the collimating lens are controlled by a controller connected to the processing unit for obtaining images based on various positions of the pattern plate and/or the collimating lens.

These and other features, aspects and advantages of the present invention will become better understood with reference to the accompanying figure and the following description.

SHORT DESCRIPTION OF THE FIGURES

Fig. 1 shows an illustrative diagram of the camera calibration system according to a first embodiment,

Fig. 2 shows a second diagram of the camera calibration system according to a second embodiment,

Fig. 3 shows an illustrative diagram of the camera calibration system according to a third embodiment,

Fig. 4 shows a flow diagram of a method for calibrating a test camera according to an embodiment,

Fig. 5 shows one of the steps of the method for calibrating a test camera as a flow diagram according to a further embodiment,

Fig. 6 shows a further step of the method for calibrating a test camera as a flow diagram according to an embodiment.

DETAILED DESCRIPTION OF EMBODIMENTS

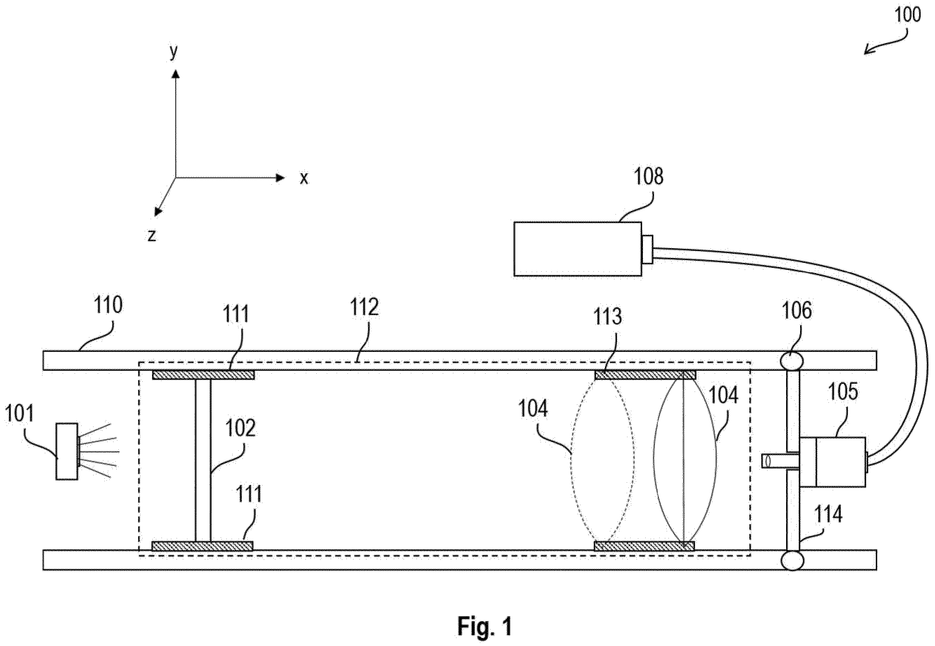

Fig. 1 shows an illustration of a camera calibration system 100 according to the invention. The system 100 comprises a tube 110 with optical elements and a processing unit 108 which is connected to a test camera in tube 110. Tube 110 comprises elements with the following functions: a source of light 101, which casts light through a partially-transparent planar pattern plate 102. In a variation of the invention the pattern plate has sharp transitions from transparent to non-transparent section. The adjustable pattern plate 102 forms a pattern of light, which is casted to the adjustable collimating lens 104 passing further to the optics of the test camera 105 placed in an adjustable fixture 106. The test camera 105 receives the light from the optical system and transmits the image to the processing unit 108. The processing unit 108 then performs necessary computations to estimate and store the calibration results.

The collimator lens 104 is aligned with the optical axis of the test camera 105 up to a small error. Since the collimating lens 104 is adjustable, it is possible to simulate different pattern distances in the image of the camera, thus covering different parts of the operating range of the test camera 105. The lens 104 and the distance of the adjustable fixture 106 are configured in a way that the pattern 102 covers the entire image of the test camera 105. For this, the collimating lens 104 may be built as a thick lens with a respective profile.

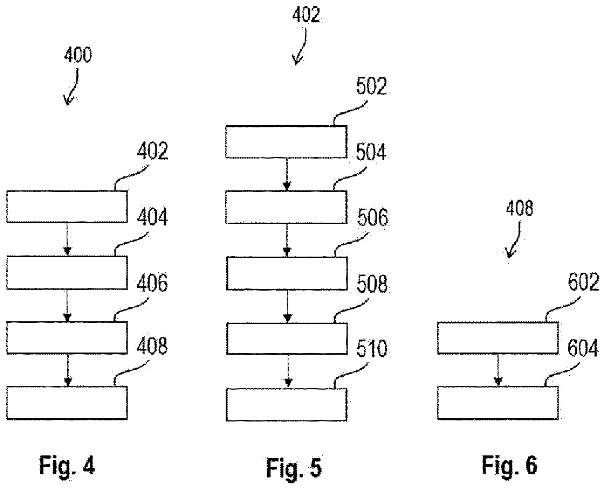

Fig. 4 shows a flow diagram with the steps of the corresponding method 400 for calibrating a test camera 105: in step 402 the camera calibration system 100 is adjusted. In step 404 light from a source of light 101 is guided to the test camera 105 that is to be calibrated, wherein the light passes through a pattern plate 102 at a first position comprising a pattern, and a collimating lens 104 at a second position. In step 406 an image produced by the light is detected by the test camera and the image is transferred to a first processing unit 108. In step 408 the image is processed for calibration.

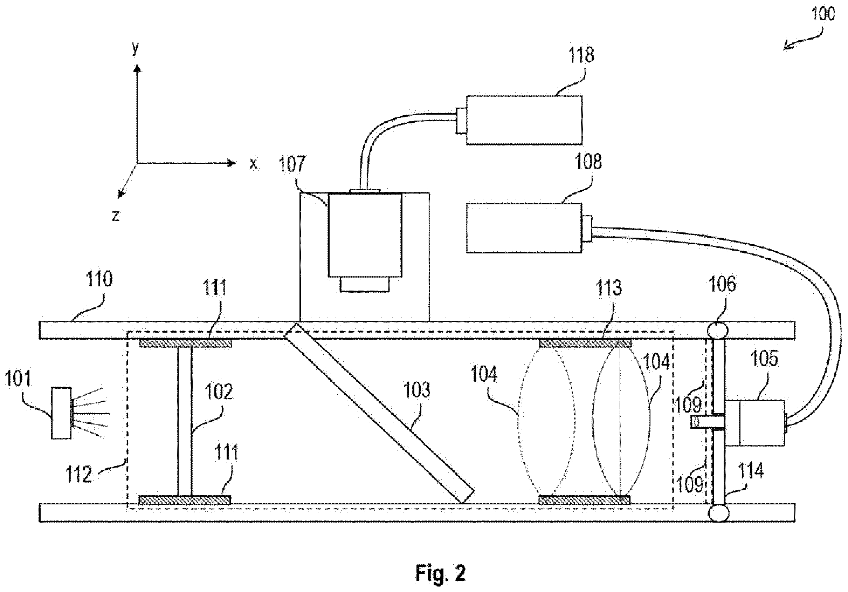

Fig. 2 shows further elements of the camera calibration system 100. The further elements are a semi-transparent mirror 103 arranged inside the tube 110 between the partially-transparent planar pattern plate 102 and the collimating lens 104, a mirror 109 arranged inside the tube 110 at the longitudinal (x-direction) position of the test camera 105, and an adjustment camera 107 that is connected to a further processing unit 118. Processing units 108 and 118 may be integrated into one device, or may be, for example two threads running on one or more cores of a processor.

With this, the following measurement is possible. Instead of the tested camera 105, a mirror 109 may be attached to the fixture 106 or on the test camera plate 114. The mirror 109 may always be in place or only when an adjustment of the system is necessary or wanted. The light of the source of light 101 then passes through the semi-transparent mirror 103 and reflects on the mirror 109 to pass back to the adjustment camera 107. The camera transmits an image to the processing unit 118, which performs computations to estimate the error in the adjustment of the complete system.

The corresponding step 402 of the method 400 comprises several sub-steps, which are shown in the flow diagram of Fig. 5. In 502 the light received from the collimating lens 104 is reflected at a mirror 109 mounted on a test camera plate 114 to which the test camera 105 is attached to. In the next step 504 the light is guided back through the collimating lens 104 to a semi-transparent inclined mirror 103, where it is on an adjustment camera 107. Subsequently, in step 506 an image is detected at the test camera 105 and the adjustment camera 107, and the detected images are processed. In step 508, the images detected at the test camera 105 and the adjustment camera 107 are then compared, and finally an inclination angle of the test camera plate 114 is adjusted in step 510 such that the camera is oriented along the optical axis, i.e., the -x - direction, based on the comparison.

With the above procedure, the adjustable fixture 106 can be manipulated in a way that the normal of the mirror has a particular orientation, e.g. such that the pattern is imaged to a specific position in the image of the adjustment camera. Herewith the setup can be repeatedly adjusted after an extensive use. Clearly, it is advantageous to construct the adjustment camera 107 and semi-transparent mirror 103 accurately and measure them mechanically and optically.

Geometric projection is modeled by intrinsic and extrinsic parameters. Intrinsic parameters describe the light paths through the optics of the camera. Extrinsic parameters describe the pose of a reference coordinate system of the projection in space, i.e. the position and the orientation of the optics in space. The intrinsic parameters are invariant to movements of the camera in space. Application of the above manifests in a camera model k with intrinsic parameters $\psi$ and extrinsic parameters $\theta$, such that any space point s maps to an image point p as $p = k(s, \theta, \psi)$. To estimate and test the geometric projection properties of a camera in camera production, a photogrammetric setup is typically used. The setup consists of a set of patterns with known spatial geometry and/or relative orientation and position to each other. The algorithm detects the pattern points $p_i$ in the images of the cameras and relates the known spatial geometry points $s_i$ of the targets to the observed pixel locations in the image. With a subsequent minimization of a function $L(\theta, \psi) = \| p_i - k(s_i, \theta, \psi) \|^2$ with respect to $\theta$ and $\psi$, extrinsic parameters $\theta$ and the intrinsic parameters $\psi$ can be estimated.

Let us for a moment assume that the behavior of the intermediate optical system is known, such that the projection of the pattern point s to the image of the test camera p is given by the relationship $p = m(s, \theta, \psi, \gamma)$, where $\theta$ and $\psi$ are the parameters of the camera (i.e. the extrinsic and the intrinsic parameters respectively) and $\gamma$ are the parameters of the intermediate optical system. Of course, the above assumption requires the model function m to exist. In practice, however, under mild mechanical conditions (e.g., the collimator lens is a perfect symmetric thick lens with known optical properties and is aligned with the optical axis of the calibrated camera), it is possible to put $p = m(s, \theta, \psi, \gamma) = k(s, \theta + \gamma_1, \psi + \gamma_2)$, where k is the regular camera model of the test camera and $\gamma = (\gamma_1, \gamma_2)$. Latter means, that the intermediate optical system can be modeled in a way that it introduces an offset to the camera parameters. Clearly, the more sophisticated is the intermediate optics, the more complex the model m is going to be.

Step 408 of method 400 represents these sub-steps, which are shown in the flow diagram of Fig. 6. In step 602 a pattern point s of the pattern of the pattern plate 102 is projected to the image p of the test camera 105 using a first projection function k such that $p = k(s, \theta + \gamma_1, \psi + \gamma_2)$ of a general model function m, where $p = m(s, \theta, \psi, \gamma)$, k is a known camera model of the test camera (105), and $\gamma = \gamma_1 + \gamma_2$ models the intermediate optical system (112) as an offset to extrinsic parameters $\theta$ and intrinsic parameters $\psi$. The projection is applied to at least one pattern point $s_i$, wherein i corresponds to the number 1...n of a pattern point $s_i$. In step 604, the calibration values for $\theta$ and $\psi$ are estimated by minimizing the function $L(\theta, \psi) = \Sigma_{i=1 \text{ to } n} \| p_i - m(s_i, \theta, \psi, \gamma) \|^2$.

In one variation, m can be chosen to pixel-wise model the displacement introduced by the intermediate optics. In other words,

$m(s, \theta, \psi, \gamma) = d(k(s, \theta, \psi), s)$, where the function d shifts in dependency of s (in particular of the distance of s to the camera) the output of the regular camera model.

In this case, the sub-steps 602, 604 shown in the flow diagram of Fig. 6 are as follows: In step 602 a pattern point s of the pattern of the pattern plate 102 is projected to the image p of the test camera 105 using a first projection function k such that $p = k(s, \theta + \gamma_1, \psi + \gamma_2)$ of a general model function m according to which $p = m(s, \theta, \psi, \gamma)$. k is a known camera model of the test camera (105), such that $p = d(k(s, \theta, \psi), s)$, with extrinsic parameters $\theta$ and intrinsic parameters $\psi$. The function d shifts the output of the regular camera model dependent on the distance of s to the test camera 105. The projection is applied to at least one pattern point $s_i$, wherein i corresponds to the number 1...n of a pattern point $s_i$. In 604 calibration values for $\theta$ and $\psi$ are estimated by minimizing $L(\theta, \psi) = \Sigma_{i=1 \text{ to } n} \| p_i - m(s_i, \theta, \psi, \gamma) \|^2$.

In another variation, m models the optical paths of light through the intermediate optics based on a trained (parametric refraction) model of the intermediate optics. If $\theta$ is known in the above model, a procedure from planar calibration patterns can be generalized to calibrate the camera (i.e. to estimate $\theta$ and $\psi$). That is, from each image j of the test camera (with a known setting of the collimated optics) we obtain the pattern points $p_{1j},...,p_{nj}$ and associate to each pattern point $p_{ij}$ a corresponding space point $s_{ij}$, based on the known settings of the collimated optics. Since the points $s_{ij}$ are defined by the pattern of on the pattern plate 102, their relationship is defined up to a scale. More precisely, we can choose the points $s_{ij} = d_j s_i$, where $d_j$ is the scaling factor of the distance depending on the settings of the pattern plate 102 and the collimator optics 104 and $s_i$ are the pattern points of the pattern plate 102 in some reference coordinate system. We then minimize $L(\theta_1,...,\theta_m, \psi) = \Sigma_{i=1 \text{ to } n} \Sigma_{j=1 \text{ to } m} \| p_{ij} - m(s_{ij}, \theta_j, \psi, \gamma) \|^2$. If some of the above parameters introduce ambiguities for a particular configuration, additional constraints can be added to the minimization problem. One choice of constraints are putting known entities as fixed constants. Such constants can be extrinsic parameters, which do not change for an entire batch of calibrated camera samples.

In a further variation, a single image of the pattern at a single collimator configuration is taken. With that it is known that the emerging minimization problem

$L(\theta, \psi) = \Sigma_{i=1 \text{ to } n} \| p_i - m(s_i, \theta, \psi, \gamma) \|^2$ is ill-posed. More precisely, the translation of the camera (x,y,z) interchanges ambiguously with the focal parameter and the principal point (e.g., the same image is obtained by changing the focal parameter and z, or by changing the x-coordinate of the principal point and x of the translation, respectively). As a solution to the above problem, it is possible to assume known and constant extrinsic translation $\theta$ (obtained, e.g., as an average translation in the method from the following section) and only minimize L with respect to the orientation of the camera. In the above case, it is also possible to put the points $s_i$ to an arbitrary scale (e.g. $d_1 = 1$).

A procedure to obtain the parameters of the intermediate optics is given in the following. A set of test cameras with known intrinsic parameters is used to learn the behavior of the intermediate optics. Consider such a set of cameras with known intrinsic parameters $\psi_1,...\psi_l$. We proceed for each camera k and for each image j by obtaining the pattern points $p_{1jk},...,p_{njk}$ with the corresponding space points $s_{ij}$. Notice that the space points do not depend on the camera but on the settings of the collimator when taking the image j. We then minimize $L(\theta_{11},...,\theta_{ml}, d1,...,dm, \gamma) = \Sigma_{k=1 \text{ to } l} \Sigma_{i=1} t_{on} \Sigma_{j=1 \text{ to } m} \| p_{ij}k - m(d_j s_i, \theta_{jk}, \psi_k, \gamma) \|^2$. Upon finding an isolated minimum, we obtain the parameters y and respective extrinsic parameters $\theta_j$ and the collimator distances $d_i$. If some of the above parameters introduce ambiguities for a particular configuration (e.g., the extrinsic parameters of the cameras ambiguously interact with some of the distances $d_i$), additional constraints can be added as in the case above. The choice of additional constraints also depends on which parameters are required to be estimated.

In one variation, for each camera, a single image of the pattern at a single collimator configuration is taken. In this case the respective problem simplifies to $L(\theta_1,...,\theta_l, \gamma) = \Sigma_{k=1 \text{ to } l} \Sigma_{i=1 \text{ to } n} \| p_{ik} - m(s_i, \theta_k, \psi_k, \gamma) \|^2$.

In another variation of the invention, the distances $d_1, ..., d_m$ are estimated from the mechanical relationship of the test pattern plate 102 and the optical lens system 104 and are assumed as constants.

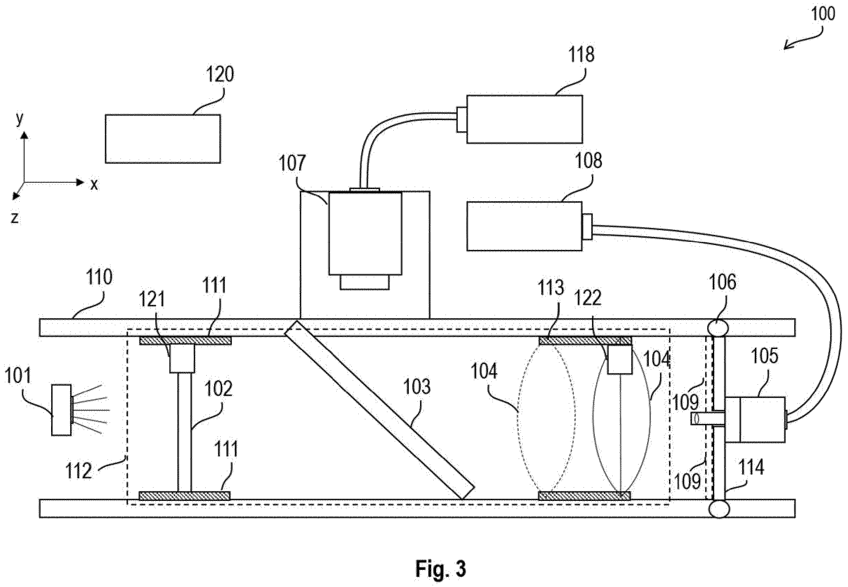

In an embodiment, the adjustment of the adjustable elements of the system, and the calibration of the test camera 105 taking place in several steps corresponding to several simulated distances may be operated fully automatically. For that, the adjustment elements 111, 113, and 106 are provided with motors controlled by controller 120 (figure 3) to adjust the setup and to vary the position of the pattern plate 102 and the lens 104 for obtaining images at different distances, and to adjust the orientation of the test camera 106.

The controller 120 may be part of a single computing device, together with processing units 108, or a separate computing and/or controlling device.

Other variations to the disclosed embodiments can be understood and effected by those skilled in the art in practicing the claimed invention, from the study of the drawings, the disclosure, and the appended claims. In the claims the word "comprising" does not exclude other elements or steps and the indefinite article "a" or "an" does not exclude a plurality. A single processor or other unit may fulfil the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

List of reference signs

| | |
|---|---|
| 100 | camera calibration system |
| 101 | source of light |
| 102 | pattern plate |
| 103 | semi-transparent mirror |
| 104 | collimating lens |
| 105 | test camera |
| 106 | adjustable test camera plate fixture |
| 107 | adjustment camera |
| 108 | first processing unit; |
| 109 | non-transparent mirror (test camera mirror) |
| 110 | mounting frame |
| 111 | pattern plate fixture |
| 112 | intermediate optical system |
| 113 | collimating lens fixture |
| 114 | test camera plate |
| 118 | second processing unit |
| 120 | controller |
| 121 | first motor |
| 122 | second motor |

**Claims**

1. Camera calibration system (100), comprising:

a mounting frame (110); and
a first processing unit (108);
wherein inside the mounting frame (110) an intermediate optical system is arranged, comprising in a longitudinal (x-) direction in series:

a pattern plate (102) with a pattern;
a collimating lens (104); and

a camera plate arranged between a top side and a bottom side of the mounting frame (110) hold by an adjustable fixture on which a

a test camera (105) to be calibrated oriented towards the pattern plate (102) and connected to the first processing unit (108) can be mounted; wherein the adjustable fixture is embodied to tilt the camera plate so as to adjust an inclination angle of the test camera;

wherein

the test camera (105) is configured to produce an image from sensed light emitted by a source of light (101) and travelling through the pattern plate (102) and the collimating lens (104), and the first processing unit (108) is configured to process the image for calibration; wherein

the first processing unit (108) is further configured to estimate intrinsic parameters of the intermediate optical system and respective extrinsic parameters and collimator distance scaling factors of a distance between the pattern plate (102) and the collimating lens (104); wherein

the longitudinal position of the pattern plate (102) is adjustable; and/or

the longitudinal position of the collimating lens (104) is adjustable; and

wherein the camera calibration system (100) further comprises:

a semi-transparent mirror (103), arranged inside the mounting frame (110) between the pattern plate (102) and the collimating lens (104); and

a non-transparent mirror (109), mounted on the camera plate (112);

an adjustment camera (107) arranged outside the tube at the same longitudinal position as the semi-transparent mirror (103); and

a second processing unit (118) connected to the adjustment camera (107);

wherein the camera calibration system is configured such that the light from the source of light passes through the pattern plate (102), the semi-transparent mirror (103), and the collimating lens (104), is reflected at the non-transparent mirror (109) to the semi-transparent mirror (103), and is reflected at semi-transparent mirror (103) to the adjustment camera (107); and the second processing unit (108) is configured to process the image for estimating the error in the adjustment of the camera calibration system (100).

2. Camera calibration system (100) according to claim 1, wherein the mounting frame (110) is a tube (110).

3. Camera calibration system (100) according to any of the claims 1 or 2, further comprising:

a first motor (121) for moving the pattern plate (102) in longitudinal (x-) direction;

a second motor (122) for moving the collimating lens (104) in longitudinal (x-) direction;

a controller (120), configured to drive the first motor and the second motor in an automated calibration process, wherein images are taken in the camera calibration system (100), and wherein the images are based on various positions of the adjustable pattern plate (102) and / or the adjustable collimating lens (104).

4. Usage of a camera calibration system (100) according to any of the previous claims for calibrating a test camera (105).

5. Method (400) for calibrating a test camera (105), comprising the steps:

adjusting (402) the camera calibration system (100) according to one of claims 1 to 3;

guiding (404) light from a source of light (101) to the test camera (105) to be calibrated, wherein the light passes through a pattern plate (102) at a first position comprising a pattern, and a collimating lens (104) at a second position;

detecting (406) an image produced by the light by the test camera and transferring the image to a first processing unit (108); and

processing (408) the image for calibration.

6. Method (400) for calibrating a test camera (105) according to claim 5, wherein adjusting the camera calibration system (100) comprises:

reflecting (502) the light received from the collimating lens (104) at a mirror (109) mounted on a test camera plate (114) to which the test camera (105) is attached to;

guiding (504) the light back through the collimating lens (104) to a semi-transparent inclined mirror (103) and reflecting the light to an adjustment camera (107);

detecting (506) an image at the test camera (105) and the adjustment camera (107) and processing the detected images;

comparing (508) the detected images at the test camera (105) and the adjustment camera (107); and

adjusting (510) the inclination angle of the test camera plate (114) such that the camera is oriented relative to the optical axis (-x - direction) based on the comparison.

7. Method for calibrating a test camera (105) according to claim 5 or 6, wherein the processing (408) of the image for calibration comprises:

projecting (602) a pattern point s of the pattern of the pattern plate (102) to the image p of the test camera (105) using a first projection function k such that $p = k(s, \theta + \gamma_1, \psi + \gamma_2)$ of a general model function m, where $p = m(s, \theta, \psi, \gamma)$, wherein k is a known camera model of the test camera (105), and $\gamma = \gamma_1 + \gamma_2$ models the intermediate optical system (112) as an offset to extrinsic parameters $\theta$ and intrinsic parameters $\psi$;

applying the projection to at least one pattern point $s_i$, wherein i corresponds to a number 1...n of a pattern point $s_i$; and

estimating (604) calibration values for $\theta$ and $\psi$ by minimizing

$$L(\theta, \psi) = \Sigma_{i=1 \text{ to } n} \| p_i - m(s_i, \theta, \psi, \gamma) \|^2.$$

8. Method for calibrating a test camera (105) according to claim 6, wherein the processing (408) of the image for calibration comprises:

projecting (602) a pattern point s of the pattern of the pattern plate (102) to the image p of the test camera (105) using a first projection function k such that $p = k(s, \theta + \gamma_1, \psi + \gamma_2)$ of a general model function m, where $p = m(s, \theta, \psi, \gamma)$, wherein k is a known camera model of the test camera (105), such that $p = d(k(s, \theta, \psi), s)$, with extrinsic parameters $\theta$ and intrinsic parameters $\psi$, and wherein the function d shifts an output of the regular camera model dependent on an distance of s to the test camera (105);

applying the projection to at least one pattern point $s_i$, wherein i corresponds to the number 1...n of a pattern point $s_i$; and

estimating (604) calibration values for $\theta$ and $\psi$ by minimizing

$$L(\theta, \psi) = \Sigma_{i=1 \text{ to } n} \| p_i - m(s_i, \theta, \psi, \gamma) \|^2_i.$$

9. Method for calibrating a test camera (105) according to claim 7 or 8, wherein

the first position of the pattern plate (102) and the second position of the collimating lens (104) are adjustable; and

projecting (602) a pattern point s of the pattern of the pattern plate (102) to the image p of the test camera (105) for more than one image j, wherein each image j is taken at a different position of the pattern plate (102) and/or the collimating lens (104), so that a pattern point $s_{ij} = d_j s_i$, wherein i corresponds to a number 1...n of a pattern point $s_i$, $d_j$ is a scaling factor of a distance depending on positions of the pattern plate (102) and the collimator lens (104), and $s_{ij}$ are pattern points of the pattern plate (102); and

estimating parameters $\theta$ and $\psi$ by minimizing $L(\theta_1, ..., \theta_m, \psi) = \Sigma_{i=1 \text{ to } n} \Sigma_{j=1 \text{ to } m} \| p_{ij} - m(s_{ij}, \theta_j, \psi, \gamma) \|^2$.

10. Method for calibrating a test camera (105) according to any of claims 7 to 9, wherein the method further comprises

determining, by using a set of l test cameras (105) with known intrinsic parameters $\psi_{1-l}$, pattern points $p_{ijk}$ corresponding to space points $s_{ij}$, wherein i corresponds to an index of a pattern point $s_i$ running from 1...n, j to an index of an image running from 1...m, and k to an index of a camera running from 1...l; and

estimating intrinsic parameters $\gamma$ of the intermediate optical system and respective extrinsic parameters $\theta_i$ and collimator distance scaling factors $d_i$ by minimizing

$$L(\theta_{11}, ..., \theta_{ml}, d_1, ..., d_m, \gamma) = \Sigma_{k=1 \text{ to } l} \Sigma_{i=1 \text{ to } n} \Sigma_{j=1 \text{ to } m} \| p_{ijk} - m(d_j s_i, \theta_{jk}, \psi_k, \gamma) \|^2.$$

11. Method for calibrating a test camera (105) according to any of claims 6 to 10, wherein the adjustment of the inclination angle of the test camera plate (114) is controlled by a controller (120) connected to the first processing unit (108) for obtaining images based on various inclinations of the test camera plate (114).

12. Method for calibrating a test camera (105) according to claim 11, wherein the adjustment of the pattern plate (102) and/or the adjustment of the collimating lens (104) is/are controlled by the controller (120) connected to the first processing unit (108) for obtaining images based on various positions of the pattern plate (102)and/or the collimating lens (104).

**Patentansprüche**

1. Kamerakalibrierungssystem (100), umfassend:

   einen Montagerahmen (110); und
   eine erste Verarbeitungseinheit (108);
   wobei innerhalb des Montagerahmens (110) ein optisches Zwischensystem angeordnet ist, umfassend in einer Längs-(x-)Richtung in Reihe:

   eine Musterplatte (102) mit einem Muster;
   eine Kollimatorlinse (104); und
   eine Kameraplatte, die zwischen einer Oberseite und einer Unterseite des Montagerahmens (110) angeordnet und von einer verstellbaren Halterung gehalten wird, auf der eine
   zu kalibrierende Testkamera (105), die auf die Musterplatte (102) ausgerichtet und mit der ersten Verarbeitungseinheit (108) verbunden ist, montiert werden kann; wobei die verstellbare Halterung so ausgebildet ist, dass sie die Kameraplatte neigt, um einen Neigungswinkel der Testkamera einzustellen;
   wobei
   die Testkamera (105) konfiguriert ist, um ein Bild aus erfasstem Licht zu erzeugen, das von einer Lichtquelle (101) emittiert wird und durch die Musterplatte (102) und die Kollimatorlinse (104) wandert, und die erste Verarbeitungseinheit (108) konfiguriert ist, um das Bild zur Kalibrierung zu verarbeiten; wobei
   die erste Verarbeitungseinheit (108) ferner konfiguriert ist, um intrinsische Parameter des optischen Zwischensystems und jeweilige extrinsische Parameter und Kollimator-Abstandsskalierungsfaktoren eines Abstands zwischen der Musterplatte (102) und der Kollimatorlinse (104) zu schätzen; wobei
   die Längsposition der Musterplatte (102) verstellbar ist; und/oder
   die Längsposition der Kollimatorlinse (104) verstellbar ist; und wobei das Kamerakalibrierungssystem (100) ferner umfasst:

   einen halbtransparenten Spiegel (103), der innerhalb des Montagerahmens (110) zwischen der Musterplatte (102) und der Kollimatorlinse (104) angeordnet ist; und
   einen nichttransparenten Spiegel (109), der auf der Kameraplatte (112) montiert ist;
   eine Einstellkamera (107), die außerhalb des Rohrs an der gleichen Längsposition wie der halbtransparente Spiegel (103) angeordnet ist; und
   eine zweite Verarbeitungseinheit (118), die mit der Einstellkamera (107) verbunden ist;
   wobei das Kamerakalibrierungssystem so konfiguriert ist, dass das Licht von der Lichtquelle durch die Musterplatte (102), den halbtransparenten Spiegel (103) und die Kollimatorlinse (104) hindurchgeht, am nichttransparenten Spiegel (109) zum halbtransparenten Spiegel (103) reflektiert wird und am halbtransparenten Spiegel (103) zur Einstellkamera (107) reflektiert wird; und die zweite Verarbeitungseinheit (108) konfiguriert ist, um das Bild zur Schätzung des Fehlers bei der Einstellung des Kamerakalibrierungssystems (100) zu verarbeiten.

2. Kamerakalibrierungssystem (100) nach Anspruch 1, wobei der Montagerahmen (110) ein Rohr (110) ist.

3. Kamerakalibrierungssystem (100) nach einem der Ansprüche 1 oder 2, ferner umfassend:

   einen ersten Motor (121) zum Bewegen der Musterplatte (102) in Längs-(x-)Richtung;
   einen zweiten Motor (122) zum Bewegen der Kollimatorlinse (104) in Längs-(x-)Richtung;
   eine Steuerung (120), die konfiguriert ist, um den ersten Motor und den zweiten Motor in einem automatisierten Kalibrierungsprozess anzutreiben, wobei Bilder in dem Kamerakalibrierungssystem (100) aufgenommen werden, und wobei die Bilder auf verschiedenen Positionen der verstellbaren Musterplatte (102) und/oder der verstellbaren Kollimatorlinse (104) basieren.

4. Verwendung eines Kamerakalibrierungssystems (100) nach einem der vorhergehenden Ansprüche zum Kalibrieren einer Testkamera (105).

5. Verfahren (400) zum Kalibrieren einer Testkamera (105), umfassend die Schritte:

   Einstellen (402) des Kamerakalibrierungssystems (100) nach einem der Ansprüche 1 bis 3;
   Leiten (404) des Lichts von einer Lichtquelle (101) zu der zu kalibrierenden Testkamera (105), wobei das Licht durch eine Musterplatte (102) an einer ersten Position, die ein Muster umfasst, und eine Kollimatorlinse (104) an einer zweiten Position hindurchgeht;
Erfassen (406) eines durch das Licht von der Testkamera erzeugten Bildes und Übertragen des Bildes an eine erste Verarbeitungseinheit (108); und
Verarbeiten (408) des Bildes zur Kalibrierung.

6. Verfahren (400) zum Kalibrieren einer Testkamera (105) nach Anspruch 5, wobei das Einstellen des Kamerakalibrierungssystems (100) umfasst:

Reflektieren (502) des von der Kollimatorlinse (104) empfangenen Lichts an einem Spiegel (109), der auf einer Testkameraplatte (114) montiert ist, an der die Testkamera (105) befestigt ist;
Leiten (504) des Lichts zurück durch die Kollimatorlinse (104) zu einem halbtransparenten geneigten Spiegel (103) und Reflektieren des Lichts zu einer Einstellkamera (107);
Erfassen (506) eines Bildes an der Testkamera (105) und der Einstellkamera (107) und Verarbeiten der erfassten Bilder;
Vergleichen (508) der erfassten Bilder an der Testkamera (105) und der Einstellkamera (107); und
Einstellen (510) des Neigungswinkels der Testkameraplatte (114), so dass die Kamera relativ zur optischen Achse (-x-Richtung) basierend auf dem Vergleich ausgerichtet ist.

7. Verfahren zum Kalibrieren einer Testkamera (105) nach Anspruch 5 oder 6, wobei das Verarbeiten (408) des Bildes zur Kalibrierung umfasst:

Projizieren (602) eines Musterpunkts s des Musters der Musterplatte (102) auf das Bild p der Testkamera (105) unter Verwendung einer ersten Projektionsfunktion k, so dass $p = k(s, \theta + \gamma_1, \psi + \gamma_2)$ einer allgemeinen Modellfunktion m, wobei $p = m(s, \theta, \psi, \gamma)$ ist, wobei k ein bekanntes Kameramodell der Testkamera (105) ist und $\gamma = \gamma_1 + \gamma_2$ das optische Zwischensystem (112) als einen Versatz zu extrinsischen Parametern $\theta$ und intrinsischen Parametern $\psi$ modelliert;
Anwenden der Projektion auf wenigstens einen Musterpunkt $s_i$, wobei i einer Nummer 1...n eines Musterpunkts $s_i$ entspricht; und
Schätzen (604) von Kalibrierungswerten für $\theta$ und $\psi$ durch Minimieren von $L(\theta, \psi) = \Sigma_{i=1 \text{ bis } n} \| p_i - m(s_i, \theta, \psi, \gamma) \|^2$.

8. Verfahren zum Kalibrieren einer Testkamera (105) nach Anspruch 6, wobei das Verarbeiten (408) des Bildes zur Kalibrierung umfasst:

Projizieren (602) eines Musterpunkts s des Musters der Musterplatte (102) auf das Bild p der Testkamera (105) unter Verwendung einer ersten Projektionsfunktion k, so dass $p = k(s, \theta + \gamma_1, \psi + \gamma_2)$ einer allgemeinen Modellfunktion m, wobei $p = m(s, \theta, \psi, \gamma)$ ist, wobei k ein bekanntes Kameramodell der Testkamera (105) ist, so dass $p = d(k(s, \theta, \psi), s)$ ist, mit extrinsischen Parametern $\theta$ und intrinsischen Parametern $\psi$, und wobei die Funktion d eine Ausgabe des regulären Kameramodells in Abhängigkeit von einem Abstand von s zur Testkamera (105) verschiebt;
Anwenden der Projektion auf wenigstens einen Musterpunkt $s_i$, wobei i der Nummer 1...n eines Musterpunkts $s_i$ entspricht; und
Schätzen (604) von Kalibrierungswerten für $\theta$ und $\psi$ durch Minimieren von $L(\theta, \psi) = \Sigma_{i=1 \text{ bis } n} \| p_i - m(s_i, \theta, \psi, \gamma) \|^2_i$.

9. Verfahren zum Kalibrieren einer Testkamera (105) nach Anspruch 7 oder 8, wobei

die erste Position der Musterplatte (102) und die zweite Position der Kollimatorlinse (104) verstellbar sind; und
Projizieren (602) eines Musterpunkts s des Musters der Musterplatte (102) auf das Bild p der Testkamera (105) für mehr als ein Bild j, wobei jedes Bild j an einer anderen Position der Musterplatte (102) und/oder der Kollimatorlinse (104) aufgenommen wird, so dass ein Musterpunkt $s_{ij} = d_j s_i$ ist, wobei i einer Nummer 1...n eines Musterpunkts $s_i$ entspricht, $d_j$ ein Skalierungsfaktor eines Abstands in Abhängigkeit von den Positionen der Musterplatte (102) und der Kollimatorlinse (104) ist, und $s_{ij}$ Musterpunkte der Musterplatte (102) sind; und
Schätzen von Parametern $\theta$ und $\psi$ durch Minimieren von $L(\theta_1, ..., \theta_m, \psi) = \Sigma_{i=1 \text{ bis } n} \Sigma_{j=1 \text{ bis } m} \| p_{ij} - m(s_{ij}, \theta_j, \psi, \gamma) \|^2$.

10. Verfahren zum Kalibrieren einer Testkamera (105) nach einem der Ansprüche 7 bis 9, wobei das Verfahren ferner umfasst

Bestimmen, unter Verwendung eines Satzes von I Testkameras (105) mit bekannten intrinsischen Parametern

$\psi_{1-l}$, von Musterpunkten $p_{ijk}$, die Raumpunkten $s_{ij}$ entsprechen, wobei i einem Index eines Musterpunkts $s_i$ von 1...n, j einem Index eines Bildes von 1...m und k einem Index einer Kamera von 1...1 entspricht; und Schätzen von intrinsischen Parametern $\gamma$ des optischen Zwischensystems und jeweiligen extrinsischen Parametern $\theta_i$ und Kollimator-Abstandsskalierungsfaktoren $d_i$ durch Minimieren von $L(\theta_{11}, ..., \theta_{ml}, d_1, ..., d_m, \gamma) = \Sigma_{k=1\ bis\ 1}\ \Sigma_{i=1\ bis\ n}\ \Sigma_{j\ =\ 1\ bis\ m} \parallel p_{ijk} - m(d_j\ S_i, \theta_{jk}, \psi_k, \gamma) \parallel^2$.

11. Verfahren zum Kalibrieren einer Testkamera (105) nach einem der Ansprüche 6 bis 10, wobei die Einstellung des Neigungswinkels der Testkameraplatte (114) von einer Steuerung (120) gesteuert wird, die mit der ersten Verarbeitungseinheit (108) verbunden ist, um Bilder basierend auf verschiedenen Neigungen der Testkameraplatte (114) zu erhalten.

12. Verfahren zum Kalibrieren einer Testkamera (105) nach Anspruch 11, wobei die Einstellung der Musterplatte (102) und/oder die Einstellung der Kollimatorlinse (104) von der Steuerung (120) gesteuert wird/werden, die mit der ersten Verarbeitungseinheit (108) verbunden ist, um Bilder basierend auf verschiedenen Positionen der Musterplatte (102) und/oder der Kollimatorlinse (104) zu erhalten.


**Revendications**

1. Système d'étalonnage de caméra (100), comprenant :

   un cadre de montage (110) ; et
   une première unité de traitement (108) ;
   dans lequel à l'intérieur du cadre de montage (110) est agencé un système optique intermédiaire, comprenant dans une direction longitudinale (x-) en série :

   une plaque à motifs (102) avec un motif ;
   une lentille de collimation (104) ; et
   une plaque de caméra agencée entre un côté supérieur et un côté inférieur du cadre de montage (110) maintenue par un dispositif de fixation réglable sur lequel
   une caméra de test (105) à étalonner orientée vers la plaque à motifs (102) et connectée à la première unité de traitement (108) peut être montée ; dans lequel le dispositif réglable est conçu pour incliner la plaque de caméra de manière à régler un angle d'inclinaison de la caméra de test ;
   dans lequel
   la caméra de test (105) est configurée pour produire une image à partir de la lumière détectée émise par une source de lumière (101) et traversant la plaque à motifs (102) et la lentille de collimation (104), et la première unité de traitement (108) est configurée pour traiter l'image pour l'étalonnage ; dans lequel la première unité de traitement (108) est également configurée pour estimer les paramètres intrinsèques du système optique intermédiaire et les paramètres extrinsèques respectifs et les facteurs d'échelle de distance de collimateur d'une distance entre la plaque à motifs (102) et la lentille de collimation (104) ; dans lequel
   la position longitudinale de la plaque à motifs (102) est réglable ; et/ou
   la position longitudinale de la lentille de collimation (104) est réglable ; et dans lequel le système d'étalonnage de caméra (100) comprend également :

   un miroir semi-transparent (103), agencé à l'intérieur du cadre de montage (110) entre la plaque à motifs (102) et la lentille de collimation (104) ; et
   un miroir non transparent (109), monté sur la plaque de caméra (112) ;
   une caméra de réglage (107) agencée à l'extérieur du tube à la même position longitudinale que le miroir semi-transparent (103) ; et
   une seconde unité de traitement (118) connectée à la caméra de réglage (107) ;
   dans lequel le système d'étalonnage de caméra est configuré de sorte que la lumière provenant de la source de lumière traverse la plaque à motifs (102), le miroir semi-transparent (103) et la lentille de collimation (104), est réfléchie sur le miroir non transparent (109) vers le miroir semi-transparent (103) et est réfléchie sur le miroir semi-transparent (103) vers la caméra de réglage (107) ; et la seconde unité de traitement (108) est configurée pour traiter l'image afin d'estimer l'erreur dans le réglage du système d'étalonnage de caméra (100).

2. Système d'étalonnage de caméra (100) selon la revendication 1, dans lequel le cadre de montage (110) est un tube (110).

**3.** Système d'étalonnage de caméra (100) selon l'une quelconque des revendications 1 ou 2, comprenant également :

un premier moteur (121) pour déplacer la plaque à motifs (102) dans la direction longitudinale (x-) ;
un second moteur (122) pour déplacer la lentille de collimation (104) dans la direction longitudinale (x-) ;
un dispositif de commande (120), configuré pour piloter le premier moteur et le second moteur dans un processus d'étalonnage automatisé, dans lequel des images sont prises dans le système d'étalonnage de caméra (100), et dans lequel les images sont basées sur diverses positions de la plaque à motifs réglable (102) et/ou de la lentille de collimation réglable (104).

**4.** Utilisation d'un système d'étalonnage de caméra (100) selon l'une quelconque des revendications précédentes pour étalonner une caméra de test (105).

**5.** Procédé (400) d'étalonnage d'une caméra de test (105), comprenant les étapes suivantes :

le réglage (402) du système d'étalonnage de caméra (100) selon l'une des revendications 1 à 3 ;
le guidage (404) de la lumière d'une source de lumière (101) vers la caméra de test (105) à étalonner, dans lequel la lumière traverse une plaque à motifs (102) à une première position comprenant un motif, et une lentille de collimation (104) à une seconde position ;
la détection (406) d'une image produite par la lumière de la caméra de test et le transfert de l'image à une première unité de traitement (108) ; et
le traitement (408) de l'image pour l'étalonnage.

**6.** Procédé (400) d'étalonnage d'une caméra de test (105) selon la revendication 5, dans lequel le réglage du système d'étalonnage de caméra (100) comprend :

la réflexion (502) de la lumière reçue de la lentille de collimation (104) sur un miroir (109) monté sur une plaque de caméra de test (114) à laquelle la caméra de test (105) est fixée ;
le guidage (504) de la lumière de retour à travers la lentille de collimation (104) vers un miroir incliné semi-transparent (103) et la réflexion de la lumière vers une caméra de réglage (107) ;
la détection (506) d'une image au niveau de la caméra de test (105) et de la caméra de réglage (107) et le traitement des images détectées ;
la comparaison (508) des images détectées par la caméra de test (105) et la caméra de réglage (107) ; et
le réglage (510) de l'angle d'inclinaison de la plaque de caméra de test (114) de sorte que la caméra est orientée par rapport à l'axe optique (direction -x-) sur la base de la comparaison.

**7.** Procédé d'étalonnage d'une caméra de test (105) selon la revendication 5 ou 6, dans lequel le traitement (408) de l'image pour l'étalonnage comprend :

la projection (602) d'un point de motif s du motif de la plaque à motifs (102) sur l'image p de la caméra de test (105) à l'aide d'une première fonction de projection k de sorte que $p = k(s, \theta + \gamma_1, \psi + \gamma_2)$ d'une fonction modèle générale m, où $p = m(s, (\theta, \psi, \gamma)$, dans lequel k est un modèle de caméra connu de la caméra de test (105), et $\gamma = \gamma_1 + \gamma_2$ modélise le système optique intermédiaire (112) comme un décalage par rapport aux paramètres extrinsèques $\theta$ et aux paramètres intrinsèques $\psi$ ;
l'application de la projection à au moins un point de motif $s_i$, dans lequel i correspond à un nombre 1...n d'un point de motif $s_i$ ; et
l'estimation (604) de valeurs d'étalonnage pour $\theta$ et $\psi$ en minimisant $L(\theta, \psi) = \Sigma_{i=1 \text{ à } n} \| p_i - m(s_i, \theta, \psi, \gamma) \|^2$.

**8.** Procédé d'étalonnage d'une caméra de test (105) selon la revendication 6, dans lequel le traitement (408) de l'image pour l'étalonnage comprend :

la projection (602) d'un point de motif s de la plaque à motifs (102) sur l'image p de la caméra de test (105) à l'aide d'une première fonction de projection k de sorte que $p = k(s, \theta + \gamma_1, \psi + \gamma_2)$ d'une fonction modèle générale m, où $p = m(s, \theta, \psi, \gamma)$, dans lequel k est un modèle de caméra connu de la caméra de test (105), de sorte que $p = d(k(s, \theta, \psi), s)$, avec des paramètres extrinsèques $\theta$ et des paramètres intrinsèques $\psi$, et dans lequel la fonction d décale une sortie du modèle de caméra régulier en fonction d'une distance de s à la caméra de test (105) ;
l'application de la projection à au moins un point de motif $s_i$, dans lequel i correspond au nombre 1...n d'un point de

motif $s_i$ ; et

l'estimation (604) de valeurs d'étalonnage pour $\theta$ et $\psi$ en minimisant $L(\theta, \psi) = \Sigma_{i=1\,à\,n} \| p_i - m(s_i, \theta, \psi, \gamma) \|^2 i$.

9. Procédé d'étalonnage d'une caméra de test (105) selon la revendication 7 ou 8, dans lequel

la première position de la plaque à motifs (102) et la seconde position de la lentille de collimation (104) sont réglables ; et

la projection (602) d'un point de motif s du motif de la plaque à motifs (102) sur l'image p de la caméra de test (105) pour plus d'une image j, dans lequel chaque image j est prise à une position différente de la plaque à motifs (102) et/ou de la lentille de collimation (104), de sorte qu'un point de motif $s_{ij} = d_j s_i$, dans lequel i correspond à un nombre 1...n d'un point de motif $s_i$, $d_j$ est un facteur d'échelle d'une distance dépendant des positions de la plaque à motifs (102) et de la lentille de collimation (104), et $s_i$, sont des points de motif de la plaque à motifs (102) ; et l'estimation de paramètres $\theta$ et $\psi$ en minimisant $L(\theta_1, ..., \theta_m, \psi) = \Sigma_{i=1\,à\,n} \Sigma_{j=1\,à\,m} \| p_{ij} - m(s_{ij}, \theta_j, \psi, \gamma) \|^2$.

10. Procédé d'étalonnage d'une caméra de test (105) selon l'une quelconque des revendications 7 à 9, dans lequel le procédé comprend également

la détermination, à l'aide d'un ensemble de l caméras de test (105) avec des paramètres intrinsèques connus $\psi_{1-l}$, des points de motif $p_{ijk}$ correspondant à des points d'espace $s_{ij}$, dans lequel i correspond à un index d'un point de motif $s_i$ allant de 1...n, j à un index d'une image allant de 1...m, et k à un index d'une caméra allant de 1...1 ; et l'estimation de paramètres intrinsèques $\gamma$ du système optique intermédiaire et de paramètres extrinsèques respectifs $\theta_i$ et de facteurs d'échelle de distance de collimateur $d_i$ en minimisant $L(\theta_{11}, ..., \theta_{ml}, d_1, ..., d_m, \gamma) = \Sigma_{k=1\,à\,l} \Sigma_{i=1\,à\,n} \Sigma_{j=1\,à\,m} \| p_{ijk} - m(d_j s_i, \theta_{jk}, \psi_k, \gamma) \|^2$.

11. Procédé d'étalonnage d'une caméra de test (105) selon l'une quelconque des revendications 6 à 10, dans lequel le réglage de l'angle d'inclinaison de la plaque de caméra de test (114) est commandé par un dispositif de commande (120) connecté à la première unité de traitement (108) pour obtenir des images sur la base de diverses inclinaisons de la plaque de caméra de test (114).

12. Procédé d'étalonnage d'une caméra de test (105) selon la revendication 11, dans lequel le réglage de la plaque à motifs (102) et/ou le réglage de la lentille de collimation (104) est/sont commandé(s) par le dispositif de commande (120) connecté à la première unité de traitement (108) pour obtenir des images sur la base de diverses positions de la plaque à motifs (102) et/ou de la lentille de collimation (104).

Fig. 1

**Fig. 2**

EP 3 890 316 B1

Fig. 3

400

402
404
406
408

**Fig. 4**

402
502
504
506
508
510

**Fig. 5**

408

602
604

**Fig. 6**

**EP 3 890 316 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007124214 A
- US 2017201744 A1
- EP 3166312 A1
- US 4648695 A
- KR 100924115 B1
- US 8619144 B1
- US 2016210750 A1